# EUROPEAN PATENT APPLICATION

(11) **EP 2 289 735 A1**
(43) Date of publication of application: **02.03.2011**
(21) Application number: 10173912.6
(22) Date of filing: 24.08.2010
(51) Int. Cl.: B60P 3/34

(54) **Improved locking mechanism**

(30) Priority: 24.08.2009 GB 0914741
(71) Applicant: Dilltown Holdings Ltd, Leighton Buzzard Bedfordshire LU7 1AE (GB)
(72) Inventor: Hodges, John, Leighton Buzzard, Bedfordshire LU7 2TQ (GB)
(74) Representative: Borton, Claire

(57) **Abstract**

A locking support assembly for a slide-out side of a vehicle or trailer comprising: a support arm assembly adapted to support the slide-out side comprising:
i) a first support member (10) having a first end and a second end, the first support member being connected to the vehicle or trailer such that the first end is located proximal to the side of the vehicle with the slide-out side and the second end is located remote from the side of the vehicle with the slide-out side;
ii) a second support member (11) having a first end and a second end, the second support member being connected to the slide-out side such that the first end is located proximal to the side of the vehicle with the slide-out side and the second end is located remote from the side of the vehicle with the slide-out side when the slide-out side is in a stowed position;
the second support member (11) being movable with respect to the first support member (10) to support the slide-out side when the slide-out side is being moved from the stowed position to an unstowed position and from the unstowed position to the stowed position;
wherein the second end of the first support member (10) is provided with a locking assembly (19) and the second end of the second support member is provided with a locking pin (18), the locking pin (18) being adapted to engage with the locking assembly (19) when the slide-out side is in the stowed position.

## Description

The present invention relates to locking support assemblies, and in particular to locking hydraulic support assemblies for use with slide-out sides in vehicles and trailers and the like.

It has become increasingly commonplace for many road-going vehicles such as RV's horseboxes, caravans, trailers and the like to be fitted with slide-out sides. In essence, a portion of the side of the vehicle is adapted to slide out creating additional space inside the vehicle. A true side is fixed whereas a slide-out-side moves between 2 or more positions. Typically the side of the vehicle slides out between 0.5 and 1 metre, supported on beams and is operated using hydraulic systems. The width of a vehicle is restricted for normal legal road use, but extra space inside the vehicle is desired for people spending large amounts of time in their vehicles, hence slide-out sides. The slide-out sides are stowed away whilst on the road to comply with legal width requirements. The sides of the vehicle also need to be locked in the stowed position when on the road.

One way which has been proposed of locking the sides of the vehicle in the stowed position is a locking hook and pin system located in the upper sides of the slide-out sides. The problem with this is that the locking mechanisms take up so much space that it is not possible to put windows or the like into the sidewalls of the side out sides.

Another way which has been proposed of locking the side walls is a hydraulic clamp which clamps over the front ends of support beams, clamping the support beam so that the beam, and thus the slide out side, cannot be moved when the slide out side is in the stowed position. When unstowing the sliding side wall the hydraulic clamp is first operated to release the clamp and then the full hydraulic system can be operated to move the slide out side into the position. The problem with this form of locking mechanism is that the locking mechanism is hidden behind the slide-out sides and the locking mechanism is difficult to get to for maintenance or fault solving when the slide-out side is stuck or locked in the stowed position.

According to a first aspect of the present invention, there is provided a locking support assembly for a slide-out side of a vehicle or trailer comprising: a support arm assembly adapted to support the slide-out side comprising:
i) a first support member having a first end and a second end, the first support member being connected to the vehicle or trailer such that the first end is located proximal to the side of the vehicle with the slide-out side and the second end is located remote from the side of the vehicle with the slide-out side;
ii) a second support member having a first end and a second end, the second support member being connected to the slide-out side such that the first end is located proximal to the side of the vehicle with the slide-out side and the second end is located remote from the side of the vehicle with the slide-out side when the slide-out side is in a stowed position;
the second support member being movable with respect to the first support member to support the slide-out side when the slide-out side is being moved from the stowed position to an unstowed position and from the unstowed position to the stowed position;
wherein the second end of the first support member is provided with a locking assembly and the second end of the second support member is provided with a locking pin, the locking pin being adapted to engage with the locking assembly when the slide-out side is in the stowed position.

This arrangement is particularly advantageous as not only is the locking mechanism located lower down so that there is adequate space for provision of windows in the side walls of the slide-out side, but also the locking mechanism, being located at the rear of the support assembly is easy to get to and not hidden behind panelling when the slide-out side is in the stowed position.

Preferably the locking support assembly further comprises a hydraulic arm assembly adapted to move the slide-out side from a stowed position to an unstowed position and from the unstowed position to the stowed position in conjunction with the second support member. This is advantageous as the slide-out side is moved from the stowed position to the unstowed position automatically on initiation of the hydraulic arm assembly.

Preferably the first support member comprises a first beam and wherein the second support member comprises a second beam.

Preferably the locking assembly comprises a first jaw and a second jaw.

Preferably the first and second jaws are adapted to open on contact with the locking pin when the slide-out side is being moved from an unstowed position to a stowed position.

Preferably the first and second jaws are plates adapted to close around and engage the locking pin.

Preferably the locking assembly further comprises an actuator adapted to open the first and second jaws and disengage the locking pin when the slide-out side is being moved from a stowed position to an unstowed position.

Preferably the locking pin is mounted vertically and the jaws of the locking assembly are mounted horizontally.

Preferably the locking pin is mounted externally to the second support member.

Preferably the locking assembly is mounted externally to the first support member.

Preferably the second support member is adapted to move with respect to the first support member using bearings.

Preferably the bearings are plastic bearings.

Preferably the second support member is located inside the first support member.

Preferably the second support member is provided with a means to prevent horizontal movement of the second support member within the first support member.

Preferably the means to prevent horizontal movement of the second support member within the first support member are spacer elements extending from the outside of the second support member towards the inside of the first member at the first end and the second end.

According to a second aspect of the present invention there is provided a vehicle or trailer comprising a locking support assembly for a slide-out side of a vehicle or trailer comprising: a support arm assembly adapted to support the slide-out side comprising:
i i) a first support member having a first end and a second end, the first support member being connected to the vehicle or trailer such that the first end is located proximal to the side of the vehicle with the slide-out side and the second end is located remote from the side of the vehicle with the slide-out side;
ii) a second support member having a first end and a second end, the second support member being connected to the slide-out side such that the first end is located proximal to the side of the vehicle with the slide-out side and the second end is located remote from the side of the vehicle with the slide-out side when the slide-out side is in a stowed position;
the second support member being movable with respect to the first support member to support the slide-out side when the slide-out side is being moved from the stowed position to an unstowed position and from the unstowed position to the stowed position;
wherein the second end of the first support member is provided with a locking assembly and the second end of the second support member is provided with a locking pin, the locking pin being adapted to engage with the locking assembly when the slide-out side is in the stowed position.

Other aspects and features of the present invention will become apparent to those ordinarily skilled in the art upon review of the following description of specific embodiments of the invention in conjunction with the accompanying figures.

The invention will now be described, by way of example only, with reference to the accompanying which of which:
Figure 1 is a side cross-section view of the rear section of the support member of the support assembly showing the locking assembly;
Figure 2 is a rear cross-section view of the rear section of the support member of the support assembly of Figure 1 showing the locking assembly;
Figure 2a is a scrap cross-section of line X-X in Figure 2;
Figure 3 is a side partial cross-section view of an alternative embodiment of the rear section of the support member of the support assembly;
Figure 3a is a scrap cross-section of line X-X in Figure 3;
Figure 4 is a rear cross-section view of an alternative embodiment of the rear section of the support assembly of Figure 3;
Figure 5 is a side cross-section view of an alternative embodiment of the rear section of the support member of the support assembly;
Figure 6 is a rear cross-section view of an alternative embodiment of the rear section of the support member of the support assembly of Figure 5;
Figure 7 is a side partial cross-section view of the front section of the support member of the support assembly Illustrating the spacer elements;
Figure 8 is a partial cross-section view of the front section of the support member of the support assembly illustrating the spacer elements of Figure 7;
Figure 9 is a side view of the full support member of the support assembly;
Figure 10 is a top view of the full support member of the support assembly of Figure 9:
Figure 11 is a front view of the support member of the support assembly of Figures 9 and 10;
Figure 12 Is a perspective view of the support member of the support assembly in a stowed position; and
Figure 13 is a perspective view of the support member of the support assembly in an un-stowed position.

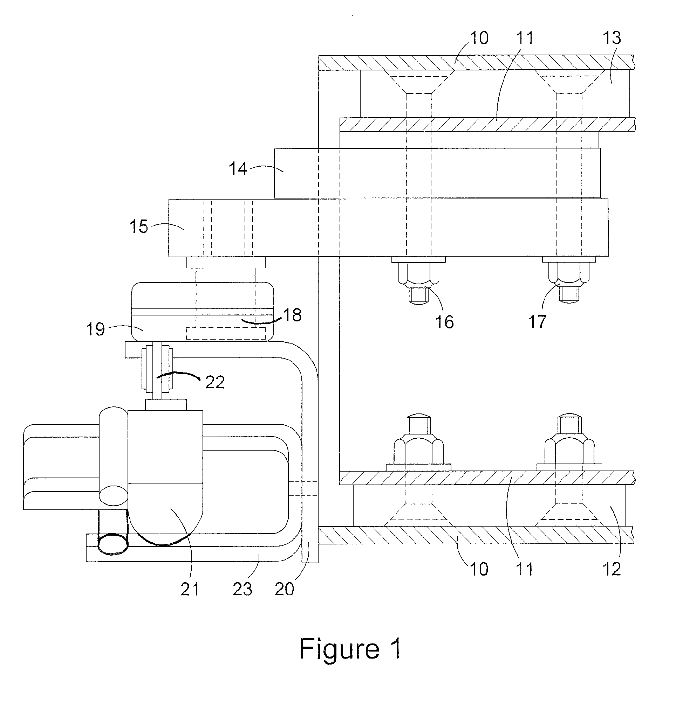

Referring to Figure 1, this illustrates a side cross-section view of the rear section of the support member of the support assembly. The support assembly is made up of a first support member or outer beam 10 made of rectangular box-section steel and a second support member or inner beam 11 again made of rectangular box-section steel. The inner beam 11 is of smaller cross-section than the outer beam 10. The inner beam 11 is located inside the outer beam 10. In between the outer beam 10 and the inner beam 11 are located bearings 12, 13 made of a plastics material. In an alternative the bearings 12, 13 are made of a metal or any other suitable material. The bearings 12, 13 allow for smooth running of the inner beam 11 inside the outer beam 10. The bearings 12, 13 run the full length of the outer beam 10. The bearings 12, 13 are fixed to the inside surface of the outer beam 10. In an alternative the bearings 12, 13 are fixed to the outside surface of the Inner beam 11. In a further alternative the second beam or support member is not internal to the first beam or support member but instead runs along the upper outer surface of the first beam or support member.

A bracket assembly 14, 15 is fixed to the inner beam 11 with nuts and bolts 16, 17. A locking pin 18 is fixed to the bracket assembly 14, 15. The bracket assembly 14, 15 is constructed such that the locking pin 18 extends vertically downwardly as shown from the second inner beam 11. The bracket assembly 14, 15 is also constructed such that the locking pin 18 extends outside of the second inner beam 11. A locking mechanism 19 comprises jaws (not shown) which are adapted to open when pressure is applied from one direction, i.e. from direction unstowed to stowed, by the locking pin 18 and close around the locking pin 18. The jaws are adapted not to open when pressure is applied from the opposite direction, i.e. from direction stowed to unstowed. The jaws will only open in that direction when opened with an actuator. The locking mechanism 19 is fixed to a bracket assembly 20. The bracket assembly 20 is fixed to outer beam 10. The locking pin 18 and locking mechanism 19 are arranged such that they are located central to the internal horizontal and vertical axis of the inner beam 11. The locking mechanism 19 is connected to an actuator 21, and a lever 22 connects the locking mechanism 19 and the actuator 21. The actuator 21 is electrically operated. In an alternative it may be hydraulically operated. When operated, the actuator 21 moves the lever 22, opening the jaws (not shown) of the locking mechanism, releasing the locking pin 18. The actuator 21 is connected to a bracket 23 which is connected to bracket 20, which is connected to the outer beam 10.

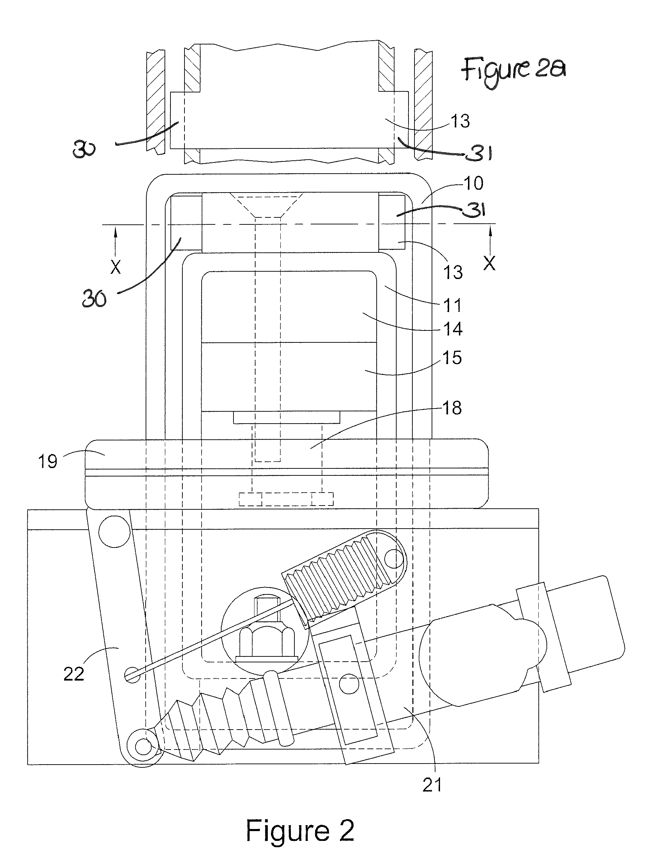

Figure 2 and Figure 2a illustrate a rear cross-section view of the same portion of the support arm assembly of Figure 1. It is dear from Figure 2 and Figure 2a that the bearings 12 (not shown) 13 are provide with cheeks 30, 31. The cheeks 30,31 act to prevent lateral movement of the inner beam 11 within the outer beam 10 at the rear of the support assembly. This is particularly important as the inner beam 11 extends out of the outer beam 10 as the slide out side is being moved from a stowed position to an un-stowed position. The cheeks 30,31 are preferably formed from the same material as the bearing 13, which is preferably a plastics material.

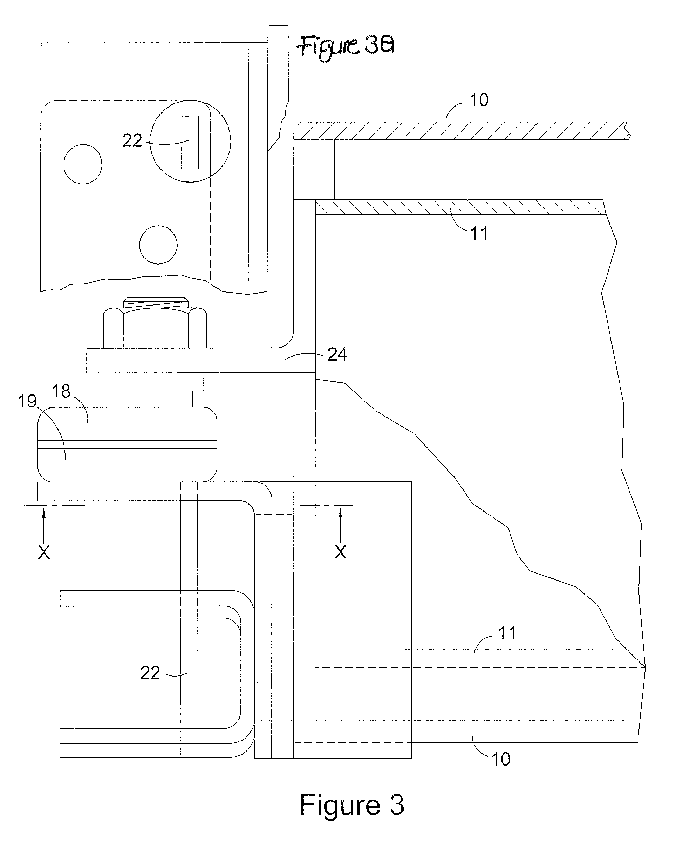

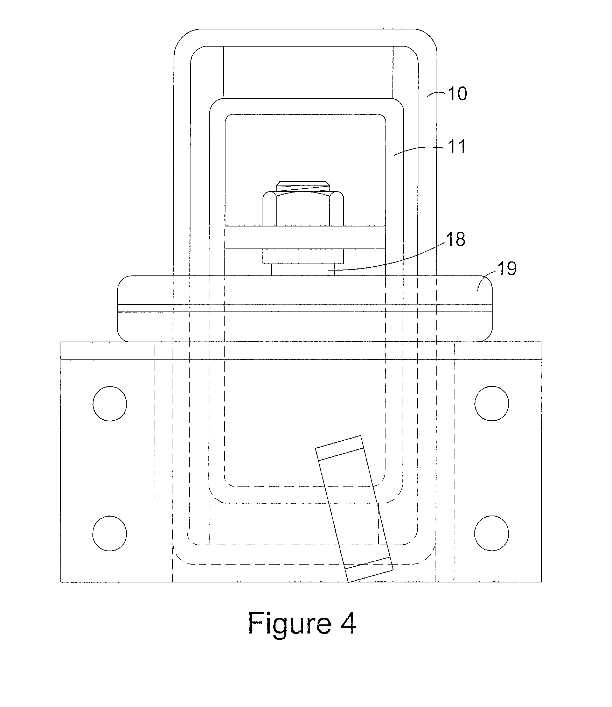

Referring to Figures 3 and 4, these illustrate an alternative bracket arrangement 24 for locking pin 18.

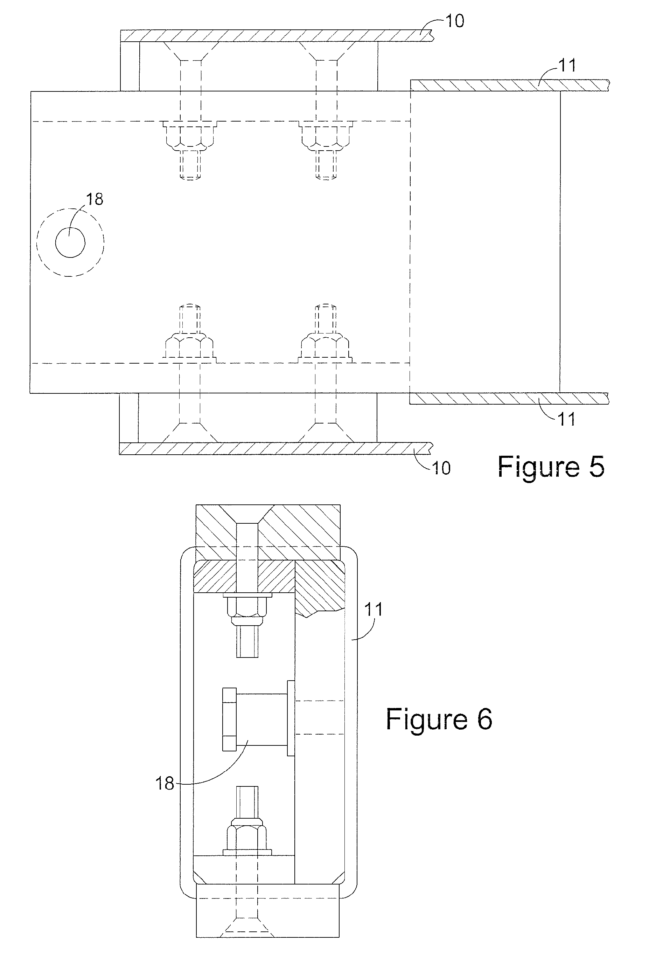

Referring to Figures 5 and 6, these illustrate an alternative horizontal mounting of locking pin 18 within the inner beam 11. In a further alternative (not shown) the locking pin 18 is mounted horizontally but extends outside by use of a bracket as in Figures 1 to 4.

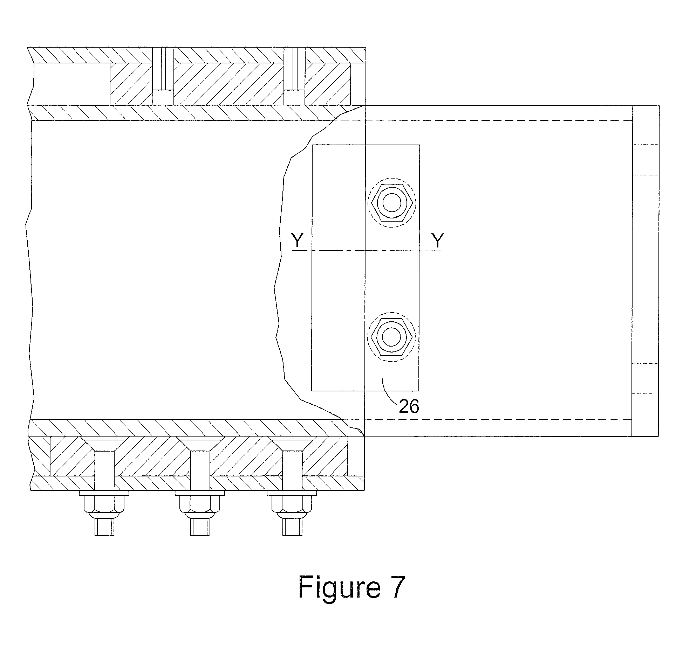

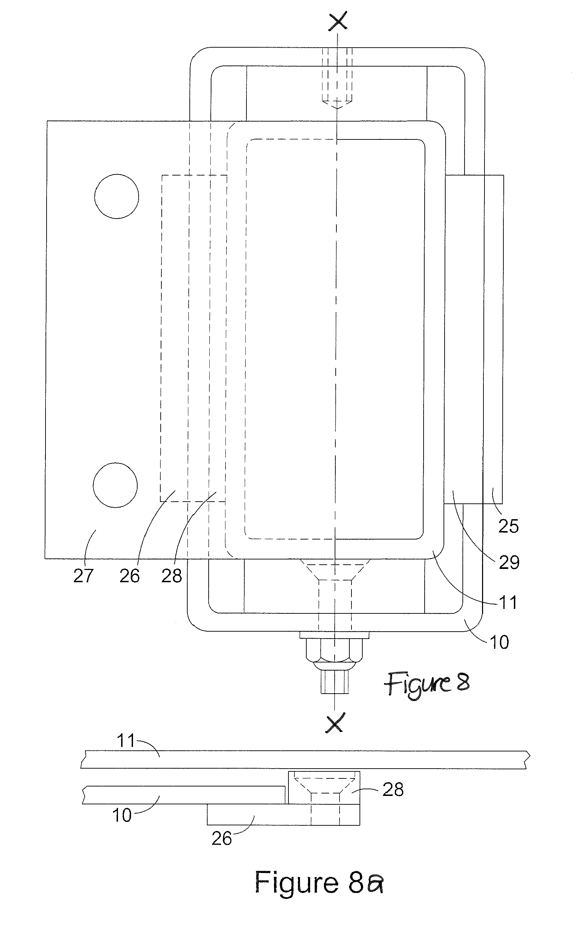

Referring to Figures 7 and 8, these illustrate spacer elements 25, 26 extending horizontally from the inner beam 11 at the first front end of the beam. The spacer elements 25, 26 prevent lateral movement of the inner beam 11 within the outer beam 10. Similar spacer elements may in addition be located at the second rear end of the beam in an alternative to the cheeks 30, 31 extending from bearing 13 as discussed above. The spacer elements extend from the outside edge of the inner beam 11 to the internal edge of the outer beam 10. The spacer elements are formed from a plastics material.

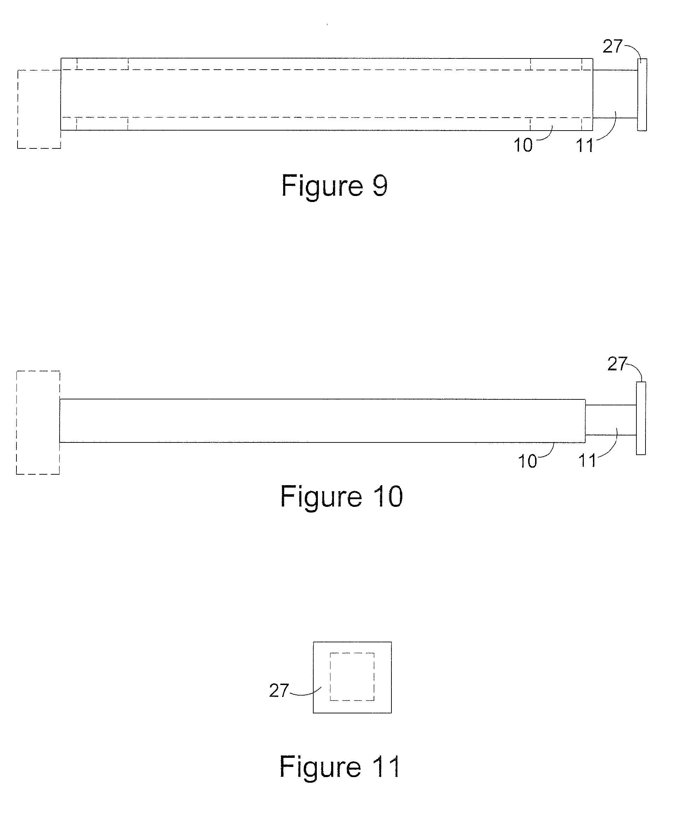

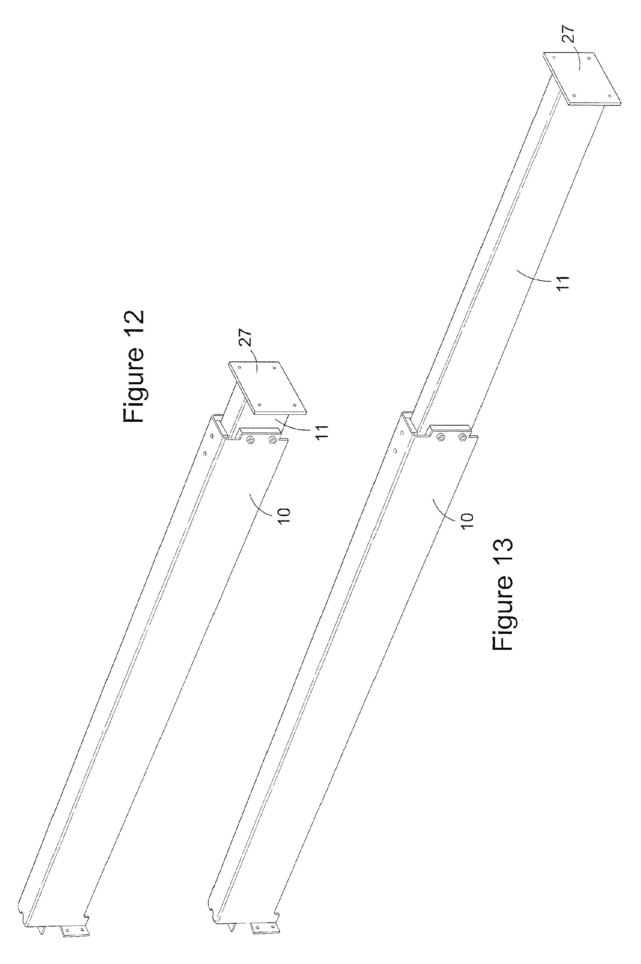

Referring to Figures 9, 10, 11, 12 and 13 these illustrate the full length of outer beam 10 and inner beam 11.

The inner beam 11 is provided with a front end plate 27 which is fixed to the front outside wall of the slide-out side so that as the slide-out side moves from the stowed position to the unstowed position under hydraulic action the underside of the slide-out side rests upon the inner beam 11.

## Claims

1. A locking support assembly for a slide-out side of a vehicle or trailer comprising:
a support arm assembly adapted to support the slide-out side comprising:
i) a first support member having a first end and a second end, the first support member being connected to the vehicle or trailer such that the first end is located proximal to the side of the vehicle with the slide-out side and the second end is located remote from the side of the vehicle with the slide-out side;
ii) a second support member having a first end and a second end, the second support member being connected to the slide-out side such that the first end is located proximal to the side of the vehicle with the slide-out side and the second end is located remote from the side of the vehicle with the slide-out side when the slide-out side is in a stowed position;
the second support member being movable with respect to the first support member to support the slide-out side when the slide-out side is being moved from the stowed position to an unstowed position and from the unstowed position to the stowed position;
wherein the second end of the first support member is provided with a locking assembly and the second end of the second support member is provided with a locking pin, the locking pin being adapted to engage with the locking assembly when the slide-out side is in the stowed position.

2. A locking support assembly as claimed in claim 1, wherein the locking support assembly further comprising a hydraulic arm assembly adapted to move the slide-out side from a stowed position to an unstowed position and from the unstowed position to the stowed position in conjunction with the second support member.

3. A locking support assembly as claimed in claim 1 or claim 2, wherein the first support member comprises a first beam and wherein the second support member comprises a second beam.

4. A locking support assembly as claimed in any preceding claim, wherein the locking assembly comprises a first jaw and a second jaw.

5. A locking support assembly as claimed in claim 4, wherein the first and second jaws are adapted to open on contact with the locking pin when the slide-out side is being moved from an unstowed position to a stowed position.

6. A locking support assembly as claimed in claim 5, wherein the first and second jaws are plates adapted to close around and engage the locking pin.

7. A locking support assembly as claimed in any of claims 4 to 6 wherein the locking assembly further comprises an actuator adapted to open the first and second jaws and disengage the locking pin when the slide-out side is being moved from a stowed position to an unstowed position.

8. A locking support assembly as claimed in any preceding claim, wherein the locking pin is mounted vertically and the jaws of the locking assembly are mounted horizontally.

9. A locking support assembly as claimed in any preceding claim, wherein the locking pin is mounted externally to the second support member.

10. A locking support assembly as claimed in any preceding claim wherein the locking assembly is mounted externally to the first support member.

11. A locking support assembly as claimed in any preceding claim, wherein the second support member is adapted to move with respect to the first support member using bearings.

12. A locking support assembly as claimed in claim 11, wherein the bearings are plastic bearings.

13. A locking support assembly as claimed in any preceding claim, wherein the second support member is located inside the first support member.

14. A locking support assembly as claimed in claim 13, wherein the second support member is provided with a means to prevent horizontal movement of the second support member within the first support member.

15. A locking support assembly as claimed in claim 14, wherein the means to prevent horizontal movement of the second support member within the first support member are spacer elements extending from the outside of the second support member towards the inside of the first member at the first end and the second end.
